# EUROPEAN PATENT APPLICATION

(11) **EP 4 734 611 A1**
(43) Date of publication of application: **29.04.2026**
(21) Application number: 24208725.2
(22) Date of filing: 24.10.2024
(51) Int. Cl.: H04W 36/36, H04W 74/08, H04W 36/30, H04W 36/00, H04W 84/12

(54) **HANDOVER OF MULTI-LINK DEVICES IN WLAN**

(71) Applicant: Siemens Aktiengesellschaft, 80333 München (DE)
(72) Inventor: Mecklenburg, Ben, 85748 Garching (DE); Bahr, Michael, 81827 München (DE); Richerzhagen, Björn, 85055 Ingolstadt (DE)
(74) Representative: Siemens Patent Attorneys

(57) **Abstract**

The proposed embodiments involve monitoring radio signal parameters from candidate access points separating connectivity data from traffic data using distinct links. If a wireless station identifies a second access point with a better signal, an association request may be sent while maintaining the current association. Upon receiving a response, the wireless station may establish a second association. Finally, the station transitions the association from the first to the second access point, thereby completing the roaming. Roaming to the second access point may be suspended until the first link is idle, ensuring seamless connectivity and optimal performance. The disclosed embodiments, as delineated herein, significantly leverage the mechanisms of Distributed Multi-Link Operation and extend these mechanisms to facilitate seamless roaming within Wi-Fi networks. These enhancements are designed to augment performance and reduce roaming latency to below 30 milliseconds, in comparison to existing roaming mechanisms predicated on IEEE 802.11k/r/v standards.

## Description

### Technical Field

The disclosed embodiments pertain to the field of wireless networks and, more particularly, to methods, apparatuses and systems facilitating roaming in wireless network environments.

### Background Art

Industrial environments of today are characterized by wireless LAN or WLAN networking topologies, colloquially also referred to as Wi-Fi. These industrial wireless networking topologies are designed to provide coverage over extensive areas, such as production facilities and railroad tracks, necessitating the deployment of multiple access points (APs). Roaming of mobile stations or stations (STAs) between different access points may involve the mobile station disassociating from one access point and associating with another target access point. This process may cause significant delays in traditional scenarios where mobile stations only support a single link, often resulting in delays of several hundred milliseconds. Such delays may be particularly challenging in industrial environments, where uninterrupted connectivity and reliable performance are essential for operating industrial equipment, such as moving machinery and automated systems. Maintaining near-seamless communication with minimal latency in these environments is essential for upholding industrial-grade efficiency and safety. Accordingly, there is a need in the art for methods, apparatuses and systems that reduce the latency associated with roaming in wireless networks.

### Summary of the Invention

A method for connecting a wireless station is proposed, the method comprising the steps of:
a) monitoring, by a wireless station being associated with a first access point, one or more radio signal parameters transmitted by one or more candidate access points other than the first access point and updating a candidate access points list held in the wireless station;
b) separating, by the wireless station, connectivity data from traffic data using:
   - a connectivity link for exchanging connectivity frames at least pertaining to monitoring and associating to the one or more candidate access point, and,
   - a traffic link for exchanging wireless frames with at least one associated access point;
c) identifying, by the wireless station, a second access point from the candidate access points list wherein the radio signal parameter of the second access point exceeds the radio signal parameter of the first access point by at least a predetermined margin;
d) sending, by the wireless station, an association request to the second access point via a second connectivity link while maintaining a first association with the first access point via a first connectivity link;
e) upon receiving, by the wireless station, an association response from the second access point, establishing a second association with the second access point via the second connectivity link while maintaining the first association with the first access point;
f) roaming, by the wireless station, the first association with the first access point to the second access point when the first connectivity link is substantially idle.

The disclosed embodiments, as delineated herein, significantly leverage the mechanisms of Distributed Multi-Link Operation and extend these mechanisms to facilitate seamless roaming within Wi-Fi networks. These enhancements are designed to augment performance and reduce roaming latency to below 30 milliseconds, in comparison to existing roaming mechanisms predicated on IEEE 802.11k/r/v standards.

The proposed embodiments advantageously allow the station to continue scanning different channels even after successfully associating with an access point. This enables the station to continuously update its information on access points within communication range.

The proposed embodiments advantageously suggest separating connectivity frames from payload frames including data and control traffic on different links of a Multi-Link Device or MLD. This way, the critical data traffic transmitted between the station and the access point is not interrupted by connectivity frames, connectivity traffic or other management traffic in general.

### Description of Embodiments

According to an embodiment, monitoring includes listening to beacon frames broadcasted by said one or more candidate access points or, alternatively or additionally, sending at least one probe requests and receiving at least one probe response from at least one candidate access point. While the former alternative embodiments may have advantages in providing more comprehensive information about the candidate access points, the latter are advantageous due to their simplicity and lower resource usage.

According to an embodiment, monitoring includes gathering information of the one or more candidate access points including a network name, a basic service set identification, a signal strength parameter, a Link Setup parameter, an operating frequency and/or supported data rates. The advantage of this embodiment lies in facilitating more informed decision-making, thereby ensuring optimal connectivity and performance.

According to an embodiment, the one or more radio signal parameters transmitted by one or more candidate access points include the signal-to-noise ratio. The signal-to-noise ratio is one of the critical radio signal parameters for assessing link quality, and its deterioration is the most urgent reason for switching access points.

According to an embodiment, step a) of monitoring is continuously repeated after concluding step e) of shifting the association. This embodiment ensures that the search for the optimal access point and a permanent update of the candidate access point list continues uninterrupted, even if a currently optimal access point appears to have been found. This continuous process allows for adaptation to changing environmental conditions and varying communication ranges as the client moves through different areas covered by access points.

Permanently updating the candidate access point list, however, may cause management overhead as the time a station scans the spectrum for nearby access points actively or passively, cannot be used for data transmission in that specific channel. This drawback may be mitigated by separating connectivity data from traffic data using Multi-Link Operation or MLO-based mechanisms. According to an embodiment, separating connectivity data from traffic data includes dividing connectivity data from traffic data using separate links of a multi-link device. In this embodiment, the participating stations and access points each are implemented as a multi-link device, establishing multiple connections between them. Separating connectivity data from traffic data may also mitigate a side effect of increased data traffic, which may be caused by the raised increased of connectivity frames necessary for the operation of the monitoring feature a). Permanently scanning and updating the candidate access point list may cause management overhead as the time a station actively or passively scans the spectrum for nearby access points cannot be used for data transmission in that specific channel. This drawback may be mitigated by separating connectivity data from traffic data using Multi-Link Operation or MLO-based mechanisms as proposed.

According to an embodiment, separating connectivity data from traffic data includes amending or inspecting a header of a data frame. In order to implement this advantageous embodiment, a structural modification of the multi-link element format and/or a per-STA subelement format, or a corresponding STA control field format of basic multi-link elements within the IEEE Standard 802.11xx protocol family - commonly known as Wi-Fi - in its various evolutions is proposed.

### Brief Description of the Drawing

- FIG. 1: illustrates a multi-link operation between two devices communicating wirelessly according to Wi-Fi 7;
- FIG. 2: is an architectural diagram illustrating a typical structure of a railway signaling system utilizing wireless communications between a train and track equipment;
- FIG. 3: is a functional block diagram illustrating a possible topology of nodes and devices in a communication network;
- FIG. 4: is a schematic diagram illustrating a multi-link element format;
- FIG. 5: is a schematic diagram illustrating a per-STA subelement format and a corresponding STA control field format of a basic multi-link element;
- FIG. 6: is a functional block diagram illustrating a roaming scenario according to an embodiment; and;
- Fig. 7: is a flow chart diagram providing a method according to an embodiment for roaming a wireless station to a new access point by establishing an additional association with the new access point and gradually migrating to it.

### Description of Examples

Hereinafter, prior to referring to the figures in this description, several terms will be defined. In the context of WLAN (Wireless Local Area Network), roaming and handover may be related but distinct concepts. While roaming may refer to a process where a client device - commonly referred to as a station - moves from a coverage area of one access point or AP to another within the same network, the term handover may refer to a process of transferring an ongoing data session from one access point to another without any disruption in communication. In summary, roaming may refer to an ability of a station to switch access points for better connectivity, while handover may refer to ensuring that ongoing sessions are maintained without disruption during this switch. The concepts of roaming and handover are likely to merge more seamlessly with the advent of contemporary and future wireless communication standards due to several advanced features and capabilities.

Hereinafter, the term »roaming« is meant to include and encompass the concept of »handover«. Specifically, roaming may refer to a process by which a station transitions from one wireless access point (AP) to another within the same network. This definition may include a seamless transfer of ongoing data sessions, ensuring uninterrupted connectivity and communication. Therefore, any reference to »roaming« within this document shall be understood to also imply the mechanisms and processes associated with »handover«.

Hereinafter, the term »access point« is intended to encompass general access elements, which may also be embodied as a station or a client device and may temporarily or permanently assume an exclusive or additional role as an access element relative to other stations. Such dual functionality may be applied in a mesh network setup, where one of the stations may additionally act as an access point for other stations while itself being connected to a main access element.

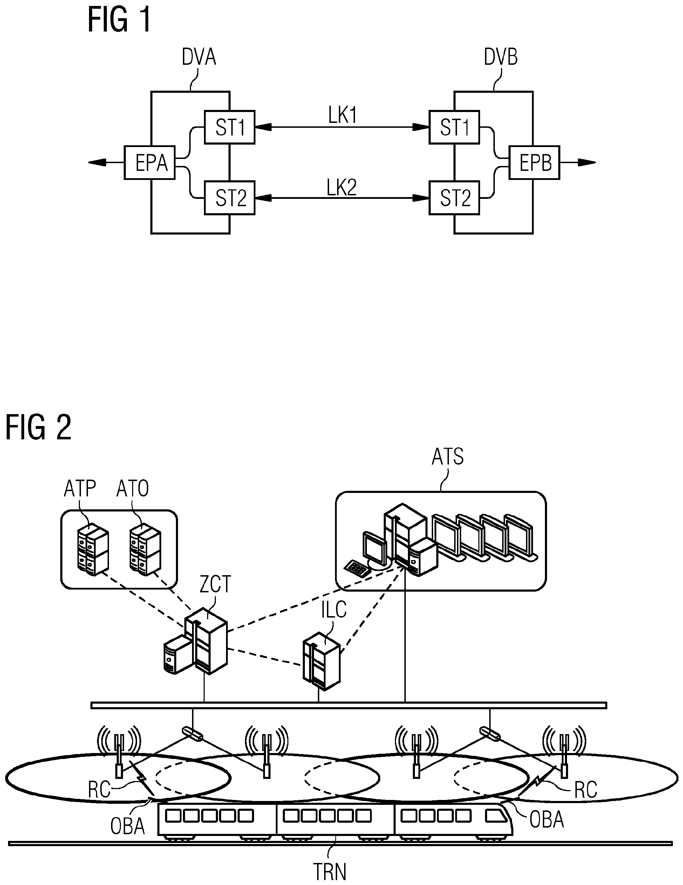

FIG 1 illustrates a Multi-Link Operation or MLO in Wi-Fi 7, as outlined in the IEEE Draft Standard 802.11be for Enhancements for Extremely High Throughput (EHT), 2024. Two multi-link devices stations DVA, DVB are shown, each capable of establishing multiple links LK1, LK2 between respective first radio transceivers STA1 and respective second radio transceivers STA2, respectively. Both links LK1, LK2 may be coordinated independently from each other.

A first and a second endpoint EPA, EPB respectively form a MAC-SAP endpoint of the respective multi-link device DVA, DVB. The endpoints EPA, EPB operate at a higher layer in the network protocol stack compared to the radio transceivers STA1, STA2. This higher-layer operation allows for allows for seamless switching between different frequency bands, links and/or channels to maintain robust and seamless connectivity.

FIG. 2 illustrates a typical architecture of a railway signaling system known as Communications-Based Train Control or CBTC which utilizes wireless communications between a train TRN and track equipment for traffic connectivity and infrastructure control. The train TRN is equipped with at least one on board antenna OBA that communicates via multiple radio connections with several base stations arranged as track equipment along the track.

A Communications-Based Train Control or CBTC system may comprise wayside equipment including an interlocking controller ILC and a zone controller ZCT for controlling every zone in the line or network. The wayside equipment may be controlled by Automatic Train Protection ATP and Automatic Train Operation ATO functionalities. The automatic train protection ATP is in charge of continuous control of the train in order to exchange information needed for a safe operation. The automatic train operation ATO is responsible for the automatic control of the traction. Its main task is either to facilitate the driver or attendant functions, or even to operate the train in a fully automatic mode. The automatic train operation ATO system may further control destination and regulation targets of the train TRN. Additionally, it may also perform auxiliary tasks including alarm or event communication and connectivity. The control of the system is performed from an automatic Train Supervision ATS. The automatic train supervision ATS may act as an interface between an operator and with external systems.

The communication side of a CBTC systems may integrate a digital networked radio system using antennas or leaky feeder cables for bi-directional communication between track equipment and trains. A 2.4 GHz band is commonly used in these systems in accordance with Wi-Fi specifications, though other alternative frequencies such as 900 MHz in the United States of America, 5.8 GHz, or other licensed bands may also be used.

CBTC architectures, as depicted, where the major data exchange consists of tracking and control information of trains, are - among industrial manufacturing processes requiring the exchange of near-real-time and deterministic data with guaranteed delivery - one relevant use case for improved Wi-Fi-based roaming.

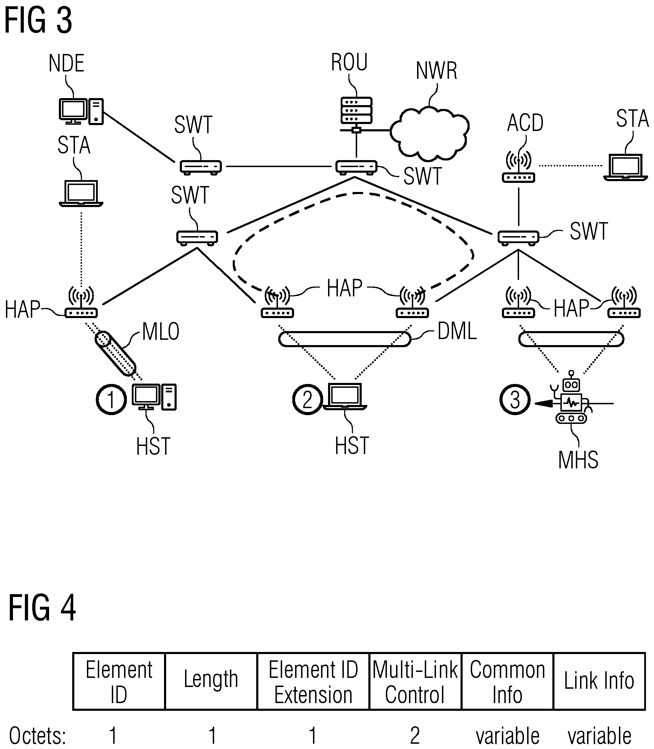

FIG. 3 is a functional block diagram illustrating a possible topology of nodes and devices in a communication network. The network as shown may incorporates Multi-Link Operation (MLO) as introduced in IEEE 802.11be / Wi-Fi 7, and potential extensions in IEEE 802.11 TGbn / Wi-Fi 8.

As shown in FIG. 3, an ethernet node NDE exchanges data with one of a plurality of switches SWT. A switch SWT is a network node responsible for forwarding data packets within the communication network between different components of the communication network. A plurality of switches is organized in a tree structure with a switch SWT directly linked to a router ROU in a trunk of the tree structure. A router ROU is a network node responsible for forwarding data between the communication system and a different network NWR such as the internet. An access point ACD shown on the right side may wirelessly connect a station STA with the communication network.

In the lower section of FIG. 3, multiple stations HST, MHS, and multiple access points HAP are depicted. Each of these stations HST, MHS is wirelessly connected to at least one respective station HAP, via Multi-Link Operation MLO as introduced in IEEE 802.11be / Wi-Fi 7. The stations HST marked with circled numerals 1 and 2 in the left and middle lower sections of FIG. 3 are stationary, i.e. non-moving stations HST, while the station MHS marked with circled numeral 3 in the lower right section is a moving station MHS. Furthermore, the station HST marked with circled numeral 1 is connected to an access point HAP via Multi-Link Operation, while the station HST marked with circled numeral 2 is connected to two access points, denoted as HAP, via a Distributed Multi-Link Operation DML.

The Multi-Link Operation MLO connecting a station HST with one access point HAP is symbolized by two links - parallel dashed lines - within a cylindrical cable. The Distributed Multi-Link Operation DML connecting a station HST with two access points HAP is symbolized by two links - scissor-shaped spread dashed lines -traversing an elliptical structure

Multi-Link Operation MLO is a feature first introduced in the wireless draft standard IEEE 802.11be which is commonly known as Wi-Fi 7. Multi-Link Operation MLO allows a single station HST to connect via multiple links to a single access point HAP as shown in FIG. 3 in the vicinity of the circled numeral 1. A Multi-Link Device, e.g. a station or an access point supporting Multi-Link Operation MLO may either operate its links in a coordinated manner or completely independent of each other, depending on hardware capabilities of the Multi-Link Device. This description presumes the capability to operate at least two links independently.

The current standardization activities within IEEE 802.11 TGbn / Wi-Fi 8 encompass discussions regarding an extension of the Multi-Link Operation feature. This proposed extension may enable a station not only to establish connections with a single access point via multiple links - as facilitated by Wi-Fi 7 - but also to connect to multiple access points concurrently through multiple links. This feature, provisionally termed Distributed Multi-Link Operation DML, is depicted in FIG. 3, wherein the middle and right stations HST, MHS marked with circled numerals 2 and 3 exemplify this capability.

However, there is presently no consensus within IEEE TGbn on the inclusion of this feature in the forthcoming version of the standard, nor on the precise technical specifications that such a feature would entail. Active discussions on this subject are ongoing.

The disclosed embodiments, as delineated herein, leverage the mechanisms of Distributed Multi-Link Operation and extend these mechanisms to facilitate seamless roaming within Wi-Fi networks. These enhancements are designed to augment performance and reduce roaming latency to below 30 milliseconds, in comparison to existing roaming mechanisms predicated on IEEE 802.11k/r/v standards.

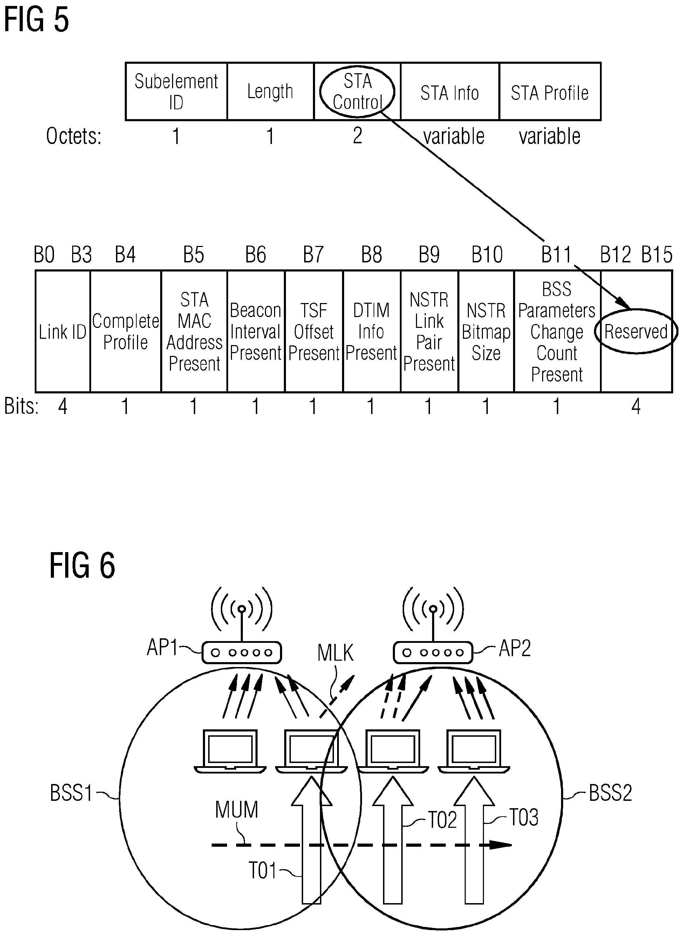

The disclosed embodiments will now be described in further detail with reference to FIG. 6 in which a functional block diagram illustrates a roaming scenario or process according to an embodiment.

The figure illustrates a movement MUM of a wireless station by a horizontal dashed arrow within a communication range of two access points AP1, AP2. The movement MUM of this mobile wireless station - illustrated in the drawing without reference sings - is depicted as a series of horizontally arranged four computer terminals. Each computer terminal in the drawing represents the same station at progressively later stages of its movement MUM, advancing from left to right over time. Two ellipses shown in the drawing illustrate a respective area of the communication range of the two access points AP1 and AP2 pertaining to relevant communication ranges BSS1, BSS2, along the movement MUM and relative to access points AP1 and AP2 gradually connected to the station along its movement.

The figure further shows several connectivity links, represented as dashed or solid arrows between the station along its movement MUM and the first or second access point AP1, AP2. A solid arrow may represent an established connectivity link in a certain phase of the process, while a dashed arrow may represent a connectivity link which is in the course of being established or even potentially being established. For example, a potential management link MLK may be in a preemptive phase, used for querying new candidates for association with the station. Only one management link MLK of the several management links as shown in the drawing is assigned with a reference sign, since this management link MLK is given particular consideration in the following.

Three arrows, arranged perpendicular to the horizontally dashed arrow symbolizing the movement MUM of the station, represent three phases T01, T02, T03 temporally progressing in the station's movement MUM from left to right. These phases T01, T02, T03 will be referred to in more detail below.

In a first phase T01 the station identifies the second access point AP2 having an advantageous or »best« radio signal parameter exceeding the monitored radio signal attribute such as the signal-to-noise ratio (SNR) or other relevant parameters of the first access point AP1 by at least a predetermined margin. An association request - or initial association request - is then sent to the second access point AP via a connectivity link. In order to transmit the association request, the station may establish a second association with the second access point via the second connectivity link, while a first associations with the first access point AP. This situation is shown in the first phase T01 where one connectivity link, depicted as a dashed arrow, is in the process of being established with the second access point AP2, while the existing two connectivity links, both depicted by solid arrows, remain established with the first access point AP1.

This connectivity link with the second access point may then be used for exchanging connectivity frames, which pertain to monitoring and associating with one or more candidate access points. The connectivity frames may also include information regarding other connectivity links of the station that need to roam. The second access point AP2 may then review information provided by the station, to ensure that settings such as the service set identifier or SSID, data rates, and link status are matched in a compatible manner and that security and access control requirements are met. Upon verification, the second access point AP2 may respond with a positive association response, indicating its willingness to associate with the requesting station.

Upon receiving this association response form the second access point, the wireless station may establish a second association with the second access point via the second connectivity link, while maintaining the first association with the first access point.

In the end of the first phase T01 the station may now transition its first association to the second access point AP2, updating its association to the access point AP2. The other connectivity links of the station with the previously connected first access point AP1 may remain connected, resulting in the station being connected to multiple access points via different links.

In an intermediary second phase T02 the roaming of the remaining connectivity links to the first access point AP1 is continued in dependency of their communication status or TX/RX status. To ensure a seamless transition, the remaining connectivity links of the station with the first access points are first checked for any ongoing transmissions, whether transmitting (TX) or receiving (RX). If the connectivity links are still busy - which may mean that they are not substantially idle - the roaming may be delayed until an idle state has been reached on some or all remaining connectivity links. The delay may follow a predefined schedule. Hereby the expected time until a remaining connectivity link becomes idle may be assessed, and roaming may be delayed accordingly to minimize service disruption of ongoing traffic flows. Once one or more connectivity links become idle, they are transitioned or roamed to the target access point AP2. At the end of the second stage T02 as shown in the drawing, all connectivity links are roamed to the target access point, and the process may be repeated on demand. The previously dashed management link MLK to the second access point AP2 is now shown as established with a solid line in the second phase T02. The remaining two previous links to the first access point AP1 are now connected to the second access point AP2. These connectivity links, represented by dashed lines, indicate that they are not yet fully established. To ensure a seamless transition, the other links are first checked for any ongoing transmissions, whether transmitting (TX) or receiving (RX). If the links are busy, the expected time until they become idle is assessed, and roaming is delayed accordingly to minimize service disruption of ongoing traffic flows. Once the links become idle, the other links are transitioned to the target access point. At this stage, all links are roamed to the target access point, and the process is repeated as necessary. Finally, at the end of the third phase T03, all connectivity links have been roamed to the second access point AP2 and all connectivity links are established.

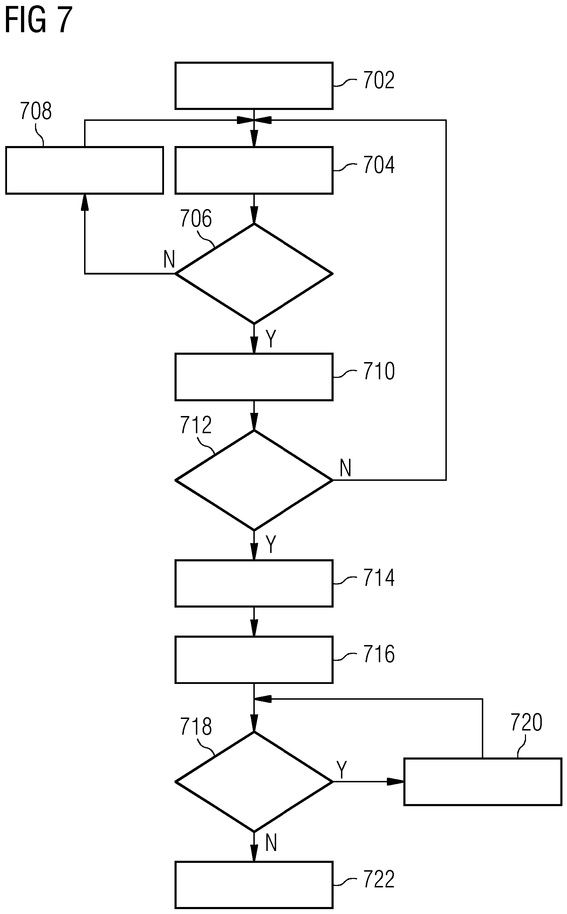

FIG. 7 is a flow chart diagram providing a method according to an embodiment for roaming a wireless station to a new access point by establishing an additional association with the new access point and gradually migrating to it. As FIG. 7 illustrates, the wireless station being associated with a first access point starts 702 monitoring one or more radio signal parameters transmitted by one or more candidate access points. In step 704, the station receives one or more beacons from at least on access point within its communication range, which may refer to a maximum distance over which the station can reliably detect and communicate with an access point.

At decision step 706, it is determined whether the beacon was received from the first access point to which the wireless station is currently associated or not. If the beacon was not received - branch N or »No« in the flowchart - from the first access point - i.e. the access point to which the station is currently associated to - but from one of the candidate access points - i.e., one or more access points within range of the station to which the station may be associated - the process advances to step 708. In step 708 the radio signal parameters extracted from the received beacon may be used to add or update the candidate access points list maintained by the wireless station, subsequently looping back to step 704 of waiting for further beacons. If the beacon was received from the first access point - branch Y or »Yes« in the flowchart - the radio signal parameters extracted from the received beacon are utilized to add or update 710 the signal parameters assigned to the first access point, i.e., the access point with which the wireless station is associated.

During a decision step 712, an optional determination may be made to assess whether a radio signal parameter such as an SNR or signal-to-noise ratio of the current first access point is below a pre-defined threshold. More generally a determination may be made as to whether a radio signal parameter of the candidate access point may exceed the monitored radio signal attribute of the first access point by at least a predetermined margin. If this is not the case - branch N or »No« in the flowchart - the process may proceed back to step 704 of waiting for further beacons.

If the signal-to-noise ratio of the first access point is below a pre-defined threshold - branch Y or »Yes« in the flowchart - a step 714 of identifying a second access point from the candidate access points list with a SNR exceeding the SNR of the first access point - and, optionally, all other access points in the candidate access points list - may ensue. Additionally, in step 714, an association request may be sent to this identified second access point while maintaining the association with the first access point.

In a subsequent step 716 the wireless station may, upon receiving a positive association response from the second access point establish a second association with the second access point via the second connectivity link while maintaining the first association with the first access point. This may be regarded as a first phase of roaming the association of the station from the first access point to the second access point. However, the first association with the first access point may be still maintained in this phase.

During a decision step 718, an optional determination may be made whether the first connectivity link - i.e. the link over which the station and the first access point are connected to manage the MLO or multi-link operation connectivity - in the still maintained first association of the station with the first access point is substantially idle. A determination 718 of whether the first connectivity link is substantially idle may involve assessing the first connectivity link to ascertain whether there is ongoing TX/RX (transmit/receive) traffic, i.e., data transmission or reception. If further exchange of connectivity frames - branch Y or »Yes« in the flowchart - is detected, the process proceeds to a step 720, which introduces a delay in the scheduled roaming based on an expected or determined idle time of the link or of links in general. After this delay, the process returns to decision step 718, where the determination - of whether the first connectivity link in the still-maintained first association of the station with the first access point is now idle - is repeated.

If no further exchange of connectivity frames - branch N or »No« in the flowchart - is detected, this first connectivity link may be transitioned from the first access point to the second access point in step 722. This transition completes the roaming process in the strict sense of roaming. In other words: When the first connectivity link is substantially idle, the first association of the station with the first access point may now be roamed to the second access point.

The following section describe specific embodiments for implementing the proposed separation of connectivity frames from data and control frames across different links of a Multi-Link Device or MLD. Connectivity frames - which may also be referred to as management frames - may be understood as data frames or data packets predominantly utilized for managing a connectivity between one or more stations and one or more access points, in particular frames for implementing and maintaining - managing - a multi-link operation or MLO and/or for implementing and maintaining - managing - one or more distinguished links of a Multi-Link Device or MLD. Examples for such connectivity frames or connectivity traffic may include beacons, probes, authentication requests, authentication responses, association requests, and association responses. Data and control frames, by contrast, may encompass typical data traffic or payload, i.e. data unrelated to the management of connectivity between one or more stations and one or more access points. A principal motivation for distinguishing connectivity frames from data and control traffic - in order to separate the connectivity traffic from the data and control traffic - across one or more links of a Multi-Link Device or MLD is to ensure that critical data traffic exchanged between stations and access points remains uninterrupted by the transmission of connectivity frames. In summary connectivity frames may be separated from traffic frames using at least a connectivity link for exchanging connectivity frames at least pertaining to monitoring and associating to the one or more candidate access point, and, a traffic link for exchanging wireless frames with at least one associated access point.

According to a first embodiment, a flag is provided for characterizing the proposed connectivity link by adding a subelement ID for the connectivity link. The first embodiment is applied by extending the WLAN standards pertaining to a format of a basic multi-link element which is part of a header field in connectivity frames such as beacons. **FIG. 4** illustrates relevant parts of a multi-link element as illustrated in Figure 9-1001E of the draft standard document entitled »IEEE Draft Standard 802.11be: Enhancements or Extremely High Throughput (EHT), 2024« and published in 2024 by the IEEE Computer Society.

The multi-link element as depicted includes a »Link Info« field located on the far-right side of the multi-link element frame as shown in **FIG. 4****.** The draft standard 802.11be defines the Link Info field to carry information that is specific to one or more links. This Link Info field is optionally present in a Multi-Link element. When present, the Link Info subfield encompasses one or more subelement IDs, as delineated in Table 9-904C of the draft standard document 802.11be, version 5.0. This table 9-904C of the draft standard document 802.11be is represented below:

| **Subelement ID** | **Name** | **Extensible** |
|---|---|---|
| 0 | Per-STA Profile | Yes |
| 1-220 | Reserved | |
| 221 | Vendor Specific | Vendor defined |
| 222-253 | Reserved | |

The table above shows optional subelement IDs for the Link-Info field of the multi-link element. A principal aspect of the embodiments is the implementation of a flag to characterize the newly proposed connectivity frames exchanged over the newly proposed connectivity link.

According to a first embodiment of implementing a flag to characterize the newly proposed connectivity Link, it is proposed to extend the above shown list of possible subelement IDs by an entry for a subelement of a specific link. The entry may be defined vendor specific. This entry may conform to a newly added subelement which may be used to label the newly proposed connectivity frames exchanged over the newly proposed connectivity link.

According to a second embodiment of implementing a flag for characterizing the newly proposed connectivity Link, it is proposed to extend an extensible station-individual profile - also referred to as a Per-STA Profile - shown in the table above. One example of extending a Per-STA profile according to the second embodiment is to use one bit of a »STA Control« subfield format that is part of a Per-STA Profile subelement as shown in FIG. 5.

**FIG. 5** is a schematic diagram illustrating a Per-STA subelement format - in the upper part of FIG. 5 - and a corresponding STA control field format of a basic multi-link element - in the lower part of FIG. 5. The »STA Control« field - highlighted in FIG. 5 by a dashed ellipse - of the per-STA subelement consists of STA control field format shown in the lower part of FIG. 5. Once the Management Link is setup, the upper part of a MAC address of a multi-link device or MLD may be mapped to connectivity frames to the specific link that was setup (e.g., using the existing TID-to-Link mapping feature).

Once the newly proposed connectivity link - which may also be referred to as management link - is established, an upper MAC layer - Medium Access Control layer - of a Multi-Link Device or MLD may map all connectivity frames to the specific link that was set up. This mapping may be achieved by mapping a Traffic Identifier or TID to a specific link. Such features may be used as a TID-to-Link mapping features in the industrial context.

In summary, the proposed embodiments involve monitoring radio signal parameters from candidate access points and separating connectivity data from traffic data using distinct links. If a wireless station identifies a second access point with a better signal, an association request may be sent while maintaining the current association. Upon receiving a response, the wireless station may establish a second association. Finally, the station transitions the association from the first to the second access point, thereby completing the roaming. Roaming to the second access point may be suspended until the first link is idle, ensuring seamless connectivity and optimal performance. The disclosed embodiments, as delineated herein, significantly leverage the mechanisms of Distributed Multi-Link Operation and extend these mechanisms to facilitate seamless roaming within Wi-Fi networks. These enhancements are designed to augment performance and reduce roaming latency to below 30 milliseconds, in comparison to existing roaming mechanisms predicated on IEEE 802.11k/r/v standards.

It is to be understood that the elements and features recited in the appended claims may be combined in different ways to produce new claims that likewise fall within the scope of the present invention. Thus, whereas the dependent claims appended below depend on only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A method for roaming a wireless station, comprising the steps of:
a) monitoring, by a wireless station being associated with a first access point, one or more radio signal parameters transmitted by one or more candidate access points other than the first access point and updating a candidate access points list held in the wireless station;
b) separating, by the wireless station, connectivity data from traffic data using:
- a connectivity link for exchanging connectivity frames at least pertaining to monitoring and associating to the one or more candidate access point, and,
- a traffic link for exchanging wireless frames with at least one associated access point;
c) identifying, by the wireless station, a second access point from the candidate access points list wherein the radio signal parameter of the second access point exceeds the radio signal parameter of the first access point by at least a predetermined margin;
d) sending, by the wireless station, an association request to the second access point via a second connectivity link while maintaining a first association with the first access point via a first connectivity link;
e) upon receiving, by the wireless station, an association response from the second access point, establishing a second association with the second access point via the second connectivity link while maintaining the first association with the first access point;
f) roaming, by the wireless station, the first association with the first access point to the second access point when the first connectivity link is substantially idle.

2. The method according to claim 1, wherein monitoring includes listening to beacon frames broadcasted by said one or more candidate access points.

3. The according to one of the aforementioned claims, wherein monitoring includes sending at least one probe requests and receiving at least one probe response from at least one candidate access point.

4. The method according to one of the aforementioned claims, wherein monitoring includes gathering information of the one or more candidate access points including a network name, a basic service set identification, a signal strength parameter, a Link Setup parameter, an operating frequency and/or supported data rates.

5. The method according to one of the aforementioned claims, wherein the one or more radio signal parameters transmitted by one or more candidate access points include a signal-to-noise ratio.

6. The method according to one of the aforementioned claims, **characterized by** continuously repeating the step a) of monitoring step after the step e) of shifting the association is concluded.

7. The method according to one of the aforementioned claims, wherein separating connectivity data from traffic data includes dividing connectivity data from traffic data using separate links of a multi-link device.

8. The method according to claim 7, wherein separating connectivity data from traffic data includes amending or inspecting a header of a data frame.

9. A wireless station being associated with a first access point, comprising:
- a wireless network interface for communicating with one or more access elements;
- a processor;
- a memory;
- a wireless network interface driver application, stored in the memory, comprising instructions operable to cause the processor and the wireless network interface to:
- monitor one or more radio signal parameters transmitted by one or more candidate access points other than the first access point and update a candidate access points list held in the wireless station;
- separate connectivity data from traffic data using:
- a connectivity link for exchanging connectivity frames at least pertaining to monitoring and associating to the one or more candidate access point, and,
- a traffic link for exchanging wireless frames with at least one associated access point;
- identify a second access point from the candidate access points list wherein the radio signal parameter of the second access point exceeds the radio signal parameter of the first access point by at least a predetermined margin;
- send an association request to the second access point via a second connectivity link while maintaining a first association with the first access point via a first connectivity link;
- upon receiving an association response from the second access point, establish a second association with the second access point via the second connectivity link while maintaining the first association with the first access point;
- roam the first association with the first access point to the second access point when the first connectivity link is substantially idle.
